# EUROPÄISCHE PATENTANMELDUNG

(11) **EP 1 696 158 A1**
(43) Veröffentlichungstag der Anmeldung: **30.08.2006**
(21) Anmeldenummer: 06002323.1
(22) Anmeldetag: 04.02.2006
(51) Int. Cl.: F16K 3/08

(54) **Ventiloberteil**

(30) Priorität: 26.02.2005 DE 202005003127 U
(71) Anmelder: Flühs Drehtechnik GmbH, D-58515 Lüdenscheid (DE)
(72) Erfinder: Lange, Lutz, 58511 Lüdenscheid (DE); Wendt, Jörg Wilhelm Wolfgang, 58507 Lüdenscheid (DE)
(74) Vertreter: Dörner, Lothar

(57) **Zusammenfassung**

Die Erfindung betrifft ein Ventiloberteil mit einem Kopfstück (1), das von einer Spindel (2) mittig durchsetzt ist, über die ein Ventil betätigbar ist, das mit dem Ventilsitz eines Gehäuses zur Anlage kommt, und einem Anschlussgewinde für das Gehäuse, das an dem Kopfstück angeordnet ist. Das Kopfstück (1) weist in Richtung der dem Gehäuse (6) abgewandten Seite im Anschluss an das Anschlussgewinde (13) eine Dichtfläche (14) auf, die bei einem Aufschrauben einer Kappe (7) auf das Kopfstück (1) einen Teil eines O-Ring-Einbauraumes (66) bildet.

## Beschreibung

Die Erfindung betrifft ein Ventiloberteil mit einem Kopfstück, das von einer Spindel mittig durchsetzt ist, über die ein Ventil betätigbar ist, das mit dem Ventilsitz eines Gehäuses zur Anlage kommt, und einem Anschlussgewinde für das Gehäuse, das an dem Kopfstück angeordnet ist.

Mit Hilfe von Ventiloberteilen wird der Austritt von Medien aus Armaturen gesteuert. Für diesen Zweck wird das Ventiloberteil mittels seines Kopfstücks in das Gehäuse einer Armatur geschraubt; auf seine Spindel wird ein Drehgriff oder Hebel gesteckt. Bei bekannten Ventiloberteilen (vgl. DE 32 07 895 C2, DE 36 38 180 C2,
DE 87 15 044 U1) sind jeweils zwei Scheiben zur Steuerung des Durchflusses vorgesehen. Die Scheiben sind aus keramischem Material hergestellt. Eine der beiden Scheiben - Steuerscheibe - ist mit Hilfe eines mit der Spindel in Verbindung stehenden Mitnehmers drehbar in dem Ventiloberteil angeordnet. Die andere Scheibe - Einlassscheibe - ist eine feste Ventilsitzscheibe, auch als Festscheibe bezeichnet. Bei Drehung der Steuerscheibe gleiten die Scheiben aneinander. Auf der dem Ventilsitz des Gehäuses zugewandten Seite ist ein Dichtring angeordnet, der an der Einlassscheibe anliegt. Der Dichtring überragt die Stirnfläche des Ventiloberteils. Er dient zur Abdichtung sowohl zur Einlassscheibe als auch zum Ventilsitz des Gehäuses.

Zur Abdichtung des Ventiloberteils gegen das Gehäuse der Armatur ist ein Dichtring vorgesehen. Der Dichtring kommt an einer O-Ring-Dichtfläche zu liegen, die in dem Gehäuse vorgesehen ist. In der Regel wird das Ventiloberteil gemeinsam mit einem bereits montiertem O-Ring ausgeliefert. Bei der Montage des Ventiloberteils in das Gehäuse wird das Ventiloberteil in das Gehäuse eingeschraubt. Hierzu weist das Ventiloberteil ein Anschlussgewinde auf, das mit einem Gewinde in dem Gehäuse korrespondiert. Zur richtigen Anordnung des Dichtrings, der als O-Ring ausgebildet ist, in der jeweiligen Dichtfläche des Ventiloberteils muss der O-Ring zur Positionierung in der am Ventiloberteil vorgesehenen Ringnut das Anschlussgewinde passieren. Hierbei kann es zu Beschädigungen des O-Rings kommen, die eine einwandfreie Abdichtung erschweren. Aus diesem Grund finden häufig im Bereich der Auflage des Kopfstücks an dem Gehäuse zusätzlich Flachdichtungen Anwendung, um eine sichere Abdichtung zu ermöglichen. Hierdurch ist jedoch der Aufwand bei der Montage erhöht. Zudem ist die Flachdichtung zwischen Kopfstück und Gehäuse sichtbar. Weiterhin besteht die Gefahr, dass die Flachdichtung über die Einschubbohrung für das Ventiloberteil nach innen ragt, wodurch einerseits das Einschrauben des Ventiloberteils erschwert ist, andererseits die Flachdichtung ebenfalls durch das Anschlussgewinde beschädigt werden kann.

Hier will die Erfindung Abhilfe schaffen. Der Erfindung liegt die Aufgabe zugrunde ein Ventiloberteil zu schaffen, das ein für den O-Ring beschädigungsfreies Einschrauben in das Gehäuse und damit eine einwandfreie Abdichtung gegen das Gehäuse ohne zusätzlichen Bedarf einer Flachdichtung ermöglicht. Gemäß der Erfindung wird diese Aufgabe dadurch gelöst, dass das Kopfstück in Richtung der dem Gehäuse abgewandten Seite im Anschluss an das Anschlussgewinde eine Dichtfläche aufweist, die bei einem Aufschrauben einer Kappe auf das Kopfstück einen Teil eines O-Ring-Einbauraumes bildet.

Dadurch, dass eine Dichtfläche auf der dem Gehäuse abgewandten Seite des Anschlussgewindes vorhanden ist, besteht die Möglichkeit, den O-Ring durch Aufschrauben der Kappe in seine konstruktiv vorbestimmte Position zu bringen, ohne diesen zu beschädigen. Der O-Ring wird lediglich in die Position an der Dichtfläche geschoben. Mit der Erfindung ist daher ein Ventiloberteil geschaffen, das ein für den O-Ring beschädigungsfreies Einschrauben in das Gehäuse und damit eine einwandfreie Abdichtung gegen das Gehäuse ohne zusätzlichen Bedarf einer Flachdichtung ermöglicht. Auch ist eine Behinderung des Einschraubens durch den O-Ring vermieden.

In Weiterbildung der Erfindung ist der O-Ring-Einbauraum von der Kontur aus O-Ring-Dichtfläche am Gehäuse, Dichtfläche sowie Ringfläche der Kappe gebildet. Durch die Ausbildung des O-Ring-Einbauraumes ist eine zuverlässige Abdichtung des Ventiloberteils zum Gehäuse mit Hilfe des O-Rings möglich.

In Weiterbildung der Erfindung weist die Gewindekombination zwischen Kopfstück und Kappe eine geringere Steigung als die Gewindekombination zwischen Anschlussgewinde und Gehäuse auf. Infolge dieser Ausgestaltung führt eine Drehung der Kappe in Richtung des Gehäuses zur Klemmung des Kopfstücks in dem Gehäuse, wobei das Verdrehen des Kopfstücks in das Gehäuse weitgehend vermieden ist. Dadurch ist eine exakte Ausrichtbarkeit des Griffes zum Gehäuse ermöglicht, da die Position des Kopfstücks in das Gehäuse durch Schrauben der Kappe in Richtung des Gehäuses klemmbar ist. Dabei ist das Ventiloberteil ohne Änderung in bekannte Gehäuse einsetzbar.

In Ausgestaltung der Erfindung ist eine Stopfbuchse vorgesehen, die die Spindel umgibt und in einer Ausnehmung in dem Kopfstück positioniert ist. Die Stopfbuchse dosiert die Drehbewegung zwischen Spindel und Kopfstück und ermöglicht so eine Variation der Haptik beim Drehen der Spindel.

Andere Ausgestaltungen und Weiterbildungen der Erfindung sind in den übrigen Unteransprüchen angegeben. Ein Ausführungsbeispiel der Erfindung ist in der Zeichnung dargestellt und wird nachfolgend im einzelnen beschrieben. Es zeigen:
- Fig. 1: in vergrößerter Darstellung ein Ventiloberteil in ein Gehäuse eingeschraubtem Zustand teilweise in Ansicht, teilweise im Axialschnitt;
- Fig. 2: die Untersicht auf eine Steuerscheibe;
- Fig. 3: die Darstellung einer Steuerscheibe teilweise in Ansicht, teilweise im Axialschnitt;
- Fig. 4: die Draufsicht auf die in Figur 3 dargestellte Steuerscheibe und
- Fig. 5: das in Figur 1 dargestellte Ventiloberteil mit teilweise aufgeschraubter Kappe.

Das als Ausführungsbeispiel gewählte Ventiloberteil weist ein Kopfstück 1 auf, das von einer in ihm radial geführten Spindel 2 mittig durchsetzt ist. Über Spindel 2 ist ein Ventil betätigbar, das mit dem Ventilsitz 61 eines Gehäuses 6 zur Anlage kommt. Das Ventil ist im Ausführungsbeispiel von einer Steuerscheibe 3 und einer Einlassscheibe 4 gebildet. Die Steuerscheibe 3 ist mit der Spindel 2 formschlüssig verbunden und im Kopfstück 1 radial geführt. An dem der Spindel 2 abgewandten Seite der Steuerscheibe 3 ist die Einlassscheibe 4 in dem Kopfstück 1 vorgesehen, an die sich ein Dichtring 5 anschließt, der mit dem Ventilsitz 61 des Gehäuses 6 zur Anlage kommt. Auf das Kopfstück 1 ist außen eine Kappe 7 aufschraubbar. An seinem dem Gehäuse 6 abgewandten Ende ist die Spindel 2 von einer Stopfbuchse 8 umgeben.

Das Kopfstück 1 besteht aus einem symmetrischen Hohlkörper, dessen beide Stirnflächen offen sind. Auf der dem Gehäuse 6 zugewandten Seite weist das Kopfstück 1 einem hülsenartigen Teil 10 auf. In dem Teil 10 sind Durchtrittsfenster 11 vorgesehen, die von Längsstegen 12 begrenzt sind. Im Ausführungsbeispiel sind zwei durch zwei Stege 12 begrenzte Fenster 11 vorgesehen. In dem hülsenartigen Teil 10 ist innen im Bereich des dem Ventilsitz 61 zugewandten Endes eine Hinterdrehung 101 angeordnet. Im Anschluss daran sind zwei - nicht dargestellte - sich diametral gegenüberliegende Ausnehmungen vorgesehen.

Im Anschluss an die Fenster 11 ist das Kopfstück 1 außen mit einem Anschlussgewinde 13 versehen. Mit Hilfe des Anschlussgewindes 13 ist das Kopfstück in das Gehäuse 6 der Armatur schraubbar. Benachbart zu dem Anschlussgewinde 13 ist an dem Kopfstück 1 eine Dichtfläche 14 ausgebildet, an der ein O-Ring 91 anliegt. Die Dichtfläche 14 ist glatt und gewindelos ausgeführt. An die Dichtfläche 14 schließt sich nach innen versetzt ein Außengewinde 15 an, das in eine Verjüngung 16 übergeht, die in eine Zylinderfläche 17 mündet. Das Kopfstück 1 hat daher eine sich in Richtung der dem Gehäuse 6 abgewandten Seite verjüngende Form. An seinem dem Gehäuse 6 abgewandten Ende ist das Kopfstück 1 innen mit einer Ausnehmung 18 versehen, die in einem nach innen gerichteten Absatz 19 endet.

Die Spindel 2 ist im Wesentlichen massiv ausgeführt. Sie ist an ihrer dem Wasserzulauf abgewandten Stirnseite außen als Außenvielkant 21 ausgeführt und innen mit einem Sackloch 22 mit Innengewinde für die Befestigung eines nicht dargestellten Drehgriffs versehen. Anschließend ist außen an der Spindel eine Zylinderfläche 23 vorgesehen, mit der die Spindel 2 in dem Kopfstück 1 radial geführt ist. In der Zylinderfläche 23 sind zwei Ringnuten 24 und 25 vorgesehen, von denen die Ringnut 25 einen O-Ring 93 aufnimmt. Der O-Ring 93 dichtet die Spindel 2 gegen das Kopfstück 1 ab. Zwischen der Zylinderfläche 23 und dem Außenvielkant 21 ist ein Einstich 26 vorgesehen.

Die Spindel 2 ist in dem Kopfstück 1 begrenzt drehbar. Auf der dem Außenvielkant 21 entgegengesetzten Seite ist zu diesem Zweck außen an der Spindel ein Quersteg 27 angeformt. Der Quersteg 27 ist zwischen einem innen im Kopfstück 1 vorgesehenen Anschlag drehbar. An den Quersteg 27 schließt sich eine Scheibe 28 an, die auf ihrer dem Gehäuse 6 zugewandten Seite einen Mitnehmer 29 aufweist.

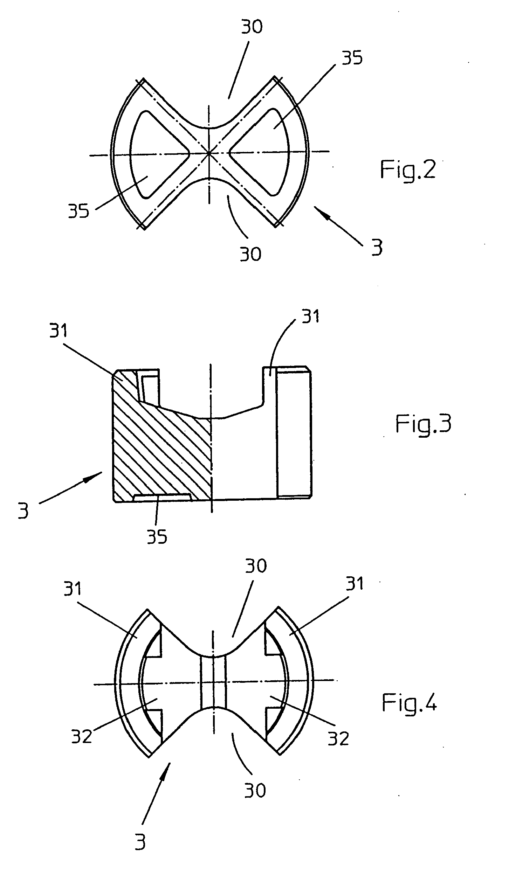

Die Steuerscheibe 3 hat eine im Wesentlichen tonnenförmige Ausbildung, aus der zwei sich gegenüberliegende Kreisausschnitte 30 ausgenommen sind (Figuren 2 und 4). Die Kreisausschnitte 30 weisen im Ausführungsbeispiel einen Winkel von ca. 90° auf. Auf ihrer der Spindel 2 zugewandten Seite weist die Steuerscheibe 3 einen ringförmigen Ansatz 31 auf. Der ringförmige Ansatz 31 umfasst in montiertem Zustand den Mitnehmer 29 der Spindel 2. Am Fuß des Ansatzes 31 sind Ausnehmungen 32 ausgebildet, in die der Mitnehmer 29 fasst. Auf der der Spindel 2 abgewandten Stirnseite sind in der Steuerscheibe 3 zwei sich gegenüberliegende sektorförmige Vertiefungen 35 vorgesehen.

Die Einlassscheibe 4 weist auf ihrem Umfang zwei - nicht dargestellte - sich diametral gegenüberliegende Nasen auf. Mit den Nasen fasst die Scheibe 4 in die Ausnehmungen, die in dem hülsenförmigen Teil 10 des Kopfstücks 1 vorgesehen sind. Die Einlassscheibe 4 ist damit drehfest in dem Kopfstück 1 angeordnet. Die Scheibe 4 weist sektorförmige Durchtrittsöffnungen auf. Im Ausführungsbeispiel sind zwei sich diametral gegenüberliegende Durchtrittsöffnungen vorgesehen.

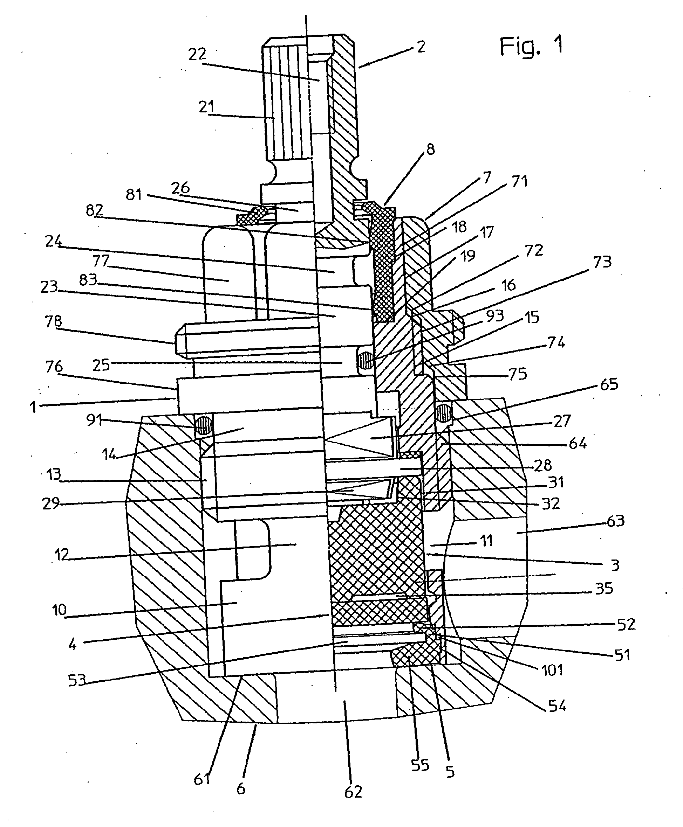

Der Dichtring 5 ist nach Art einer Lippendichtung ausgebildet. Er besteht im Wesentlichen aus einem Mittelstück 51, an dem auf seiner der Scheibe 4 zugewandten Stirnseite eine Lippe 52 angeformt ist. Die Lippe 52 hat im Querschnitt eine im Wesentlichen trapezförmige Ausbildung. Die Lippe 52 ist unter einem Winkel zur Horizontalen angeordnet. Die Außenfläche der Lippe 52 liegt an der Scheibe 4 dichtend an (Figur 1). Im Anschluss an die Lippe 52 ist zwischen dieser und dem Mittelstück 51 eine Ausnehmung 53 ausgebildet. Das Mittelstück 51 ist außen mit einem Bund 54 versehen, der in die Hinterdrehung 101 des hülsenartigen Teils 10 greift. Innen ist an dem Mittelstück 51 eine Wulst 55 ausgebildet. In montiertem Zustand des Ventiloberteils liegt die Außenseite der Wulst 55 plan auf dem Ventilsitz 61 auf.

Das Gehäuse 6 ist mit einem Ventilsitz 61 versehen. In dem Ventilsitz 61 mündet ein Zulauf 62, durch den Wasser in das Ventiloberteil eintritt. Im Bereich der Durchtrittsfenster 11 befindet sich ein Auslaufkanal 63, durch den das Wasser aus dem Ventiloberteil austritt. Im Anschluss an den Auslaufkanal 63 weist das Gehäuse 6 ein Anschlussgewinde 64 auf, an das sich eine O-Ring-Dichtfläche 65 anschließt. Die O-Ring-Dichtfläche 65 nimmt in montiertem Zustand des Ventiloberteils in dem Gehäuse den O-Ring 91 auf.

Die Kappe 7 ist im Wesentlichen hohlzylindrisch ausgeführt. Sie weist an ihrem dem Gehäuse 6 abgewandten Ende innen eine Zylinderfläche 71 auf, die in eine Erweiterung 72 übergeht. An die Erweiterung 72 schließt sich ein Innengewinde 73 an, das mit dem Außengewinde 15 des Kopfstücks 1 korrespondiert. Das Innengewinde 73 endet in einer zweiten Erweiterung 74, an die sich eine Zylinderfläche 75 anschließt. Außen ist im Bereich der Zylinderfläche 75 ein Einschraubbund 76 ausgebildet, der nach dem Einschrauben des Ventiloberteils mit einer Ringfläche 79 auf dem Gehäuse der Gehäuse 6 aufliegt und mit dem Dichtring 91 in Kontakt steht. Das Einschrauben in die Gehäuse 6 erfolgt mittels eines Außenmehrkants 77, der auf der der Gehäuse 6 abgewandten Seite der Kappe 7 vorgesehen ist. Die Kappe 7 ist außen mit einem Außengewinde 78 für die Aufnahme einer nicht dargestellten Hülse versehen. Die Kappe 7 kann aber auch außen insgesamt nach Art eines Kegelstumpfes ausgebildet sein, der im Bereich des Einschraubbund Ausnehmungen nach Art eines Mehrkants aufweist.

Die Stopfbuchse 8 ist aus Kunststoff hergestellt. Sie dient zum Bremsen der Bewegung zwischen Spindel 2 sowie Kopfstück 1 und weist eine rotationssymmetrische Form auf. Sie ist an ihrem einen Ende mit einem Kragen 81 versehen, der in montiertem Zustand in den Einstich 26 der Spindel greift. Innen ist die Stopfbuchse 8 mit zwei zueinander beabstandeten Wulsten 82 und 83 versehen, die beiderseits der Ringnut 24 mit der Spindel 2 in Berührung stehen. In montiertem Zustand ist die Stopfbuchse 8 in der Ausnehmung 18 des Kopfstücks 1 positioniert. Mit ihrem dem Kragen 81 abgewandten Ende liegt die Stopfbuchse 8 dann auf dem Absatz 19 auf.

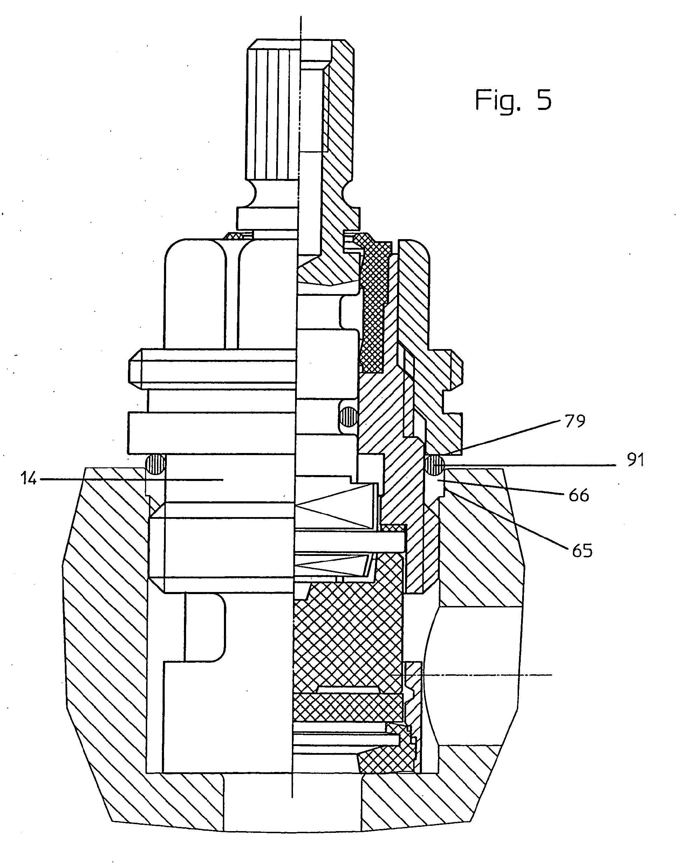

Der O-Ring 91 liegt vor der Montage des Ventiloberteils in das Gehäuse an der Dichtfläche 14 des Kopfstücks 1 an oder befindet sich in einschiebfähiger Lage auf der dem Gehäuse abgewandten Seite der Dichtfläche 14. Beim Einschrauben des Kopfstücks 1 fährt der O-Ring 91 dann an die am Gehäuse 6 vorgesehene O-Ring-Dichtfläche 65 heran. Durch Aufschrauben der Kappe 7 kommt für den Fall, dass der O-Ring 91 nicht bis an die O-Ring-Dichtfläche 65 herangefahren ist (Figur 5), der Einschraubbund 76 mit seiner Ringfläche 79 mit dem O-Ring 91 in Berührung und drückt diesen beschädigungsfrei beim weiteren Aufschrauben der Kappe an die O-Ring-Dichtfläche 65 heran, bis die Ringfläche 79 auf dem Gehäuse 6 aufliegt (Figur 1). Durch die Kontur der O-Ring-Dichtfläche 65, der Dichtfläche 14 sowie der Ringfläche 79 ist ein O-Ring-Einbauraum 66 geschaffen, in der der O-Ring 91 beschädigungsfrei zu liegen kommt, wodurch die Abdichtung geschaffen ist.

Zudem besteht mit Hilfe des Ventiloberteils die Möglichkeit den Griff der jeweiligen Armatur positionsgenau auszurichten. Dies ist dadurch erzielt, dass das Kopfstück 1 und die Kappe 7 durch das Außengewinde 15 und das Innengewinde 73 schraubbar miteinander verbunden sind. Zunächst wird das Kopfstück 1 in das Gehäuse eingeschraubt, bis der Dichtring 5 mit dem Ventilsitz 61 in Kontakt tritt. Dies erfolgt durch Aufsetzen des Griffs auf die Spindel 2 und Drehen des Griffes, wodurch es wegen der formschlüssigen Verbindung zwischen Griff und Spindel 2, sowie der begrenzten Drehbarkeit der Spindel 2 im Kopfstück 1 zu einer exakten Positionierung des Griffes zum Gehäuse kommt. Zwar kann der Griff nach dem Einschrauben des Kopfstücks 1 mit Hilfe des Griffs und der Spindel 2 abgenommen und zur Ausrichtung versetzt erneut aufgesetzt werden; wegen der nicht stufenlosen Rasterung des Außenvielkants 21 ist jedoch eine exakte Ausrichtung nicht möglich. Hierzu müsste das Kopfstück weiter eingeschraubt werden als bis zur Anlage des Einschraubbundes mit dem Gehäuse, was im Gewinde bzw. im Bereich der Dichtfläche für den O-Ring zu hohen mechanischen Spannungen führt und die dauerhafte Festigkeit des Ventiloberteils nachteilig beeinflussen kann. Bei dem erfindungsgemäßen Ventiloberteil besteht jedoch die Möglichkeit die exakte Positionierung des Griffes zu ermöglichen. Der Griff wird dabei gehalten und die Position des Kopfstücks 1 in dem Gehäuse 6 durch Schrauben der Kappe 7 in Richtung des Gehäuses 6 geklemmt. Im Ausführungsbeispiel weist die Gewindekombination 15, 73 zwischen Kopfstück 1 und Kappe 7 eine geringe Steigung als die Gewindekombination 13, 64 zwischen Kopfstück 1 und Gehäuse 6 auf. Dies erleichtert das Halten des Kopfstücks 1 mit dem Griff in der exakten Positionierung. Hierdurch ist eine noch genauere Ausrichtung des Griffes möglich, was beispielsweise bei der Montage von nebeneinander angeordneten Armatur aus designtechnischen Gründen gewünscht sein kann.

## Patentansprüche

1. Ventiloberteil mit einem Kopfstück, das von einer Spindel mittig durchsetzt ist, über die ein Ventil betätigbar ist, das mit dem Ventilsitz eines Gehäuses zur Anlage kommt, und einem Anschlussgewinde für das Gehäuse, das an dem Kopfstück angeordnet ist, **dadurch gekennzeichnet, dass** das Kopfstück (1) in Richtung der dem Gehäuse (6) abgewandten Seite im Anschluss an das Anschlussgewinde (13) eine Dichtfläche (14) aufweist, die bei einem Aufschrauben einer Kappe (7) auf das Kopfstück (1) einen Teil eines O-Ring-Einbauraumes (66) bildet.

2. Ventiloberteil nach Anspruch 1, **dadurch gekennzeichnet, dass** der O-Ring-Einbauraum (66) von der Kontur aus O-Ring-Dichtfläche (65), Dichtfläche (14) sowie einer Ringfläche (79) der Kappe (7) gebildet ist.

3. Ventiloberteil nach einem der Ansprüche 1 oder 2, **dadurch gekennzeichnet, dass** die Gewindekombination (15, 73) zwischen Kopfstück (1) und Kappe (7) eine geringere Steigung als die Gewindekombination zwischen Anschlussgewinde (13) des Kopfstücks (1) und einem Anschlussgewinde (64) des Gehäuses (6) aufweist.

4. Ventiloberteil nach einem der Ansprüche 1 bis 3, **dadurch gekennzeichnet, dass** eine Stopfbuchse (8) vorgesehen ist, die die Spindel (2) umgibt und in einer Ausnehmung (18) in dem Kopfstück (1) positioniert ist.
